# EUROPEAN PATENT APPLICATION

(11) **EP 4 641 164 A1**
(43) Date of publication of application: **29.10.2025**
(21) Application number: 23906506.3
(22) Date of filing: 08.11.2023
(51) Int. Cl.: G01N 1/28

(54) **SLIDE GLASS COOLING/HEATING DEVICE AND SLIDE GLASS COOLING/HEATING METHOD**

(30) Priority: 23.12.2022 JP 2022207481
(71) Applicant: HITACHI HIGH-TECH CORPORATION, Tokyo 105-6409 (JP)
(72) Inventor: SAKAMOTO Kinshiro, Tokyo 105-6409 (JP); ENDO Masashi, Tokyo 105-6409 (JP); SUGIYAMA Hidetoshi, Tokyo 105-6409 (JP); ZHOU Guangbin, Tokyo 100-8280 (JP); KAWACHI Ryosuke, Tokyo 105-6409 (JP)
(74) Representative: Strehl & Partner mbB
(86) International application number: PCT/JP2023/040276
(87) International publication number: WO 2024/135135

(57) **Abstract**

A slide glass cooling and heating apparatus 10 includes a plurality of heat pumps 22a and 22b configured to cool or heat a plurality of slide glasses 11 one by one, a radiator configured to promote heat dissipation of the heat pumps 22a and 22b, and a heat conductive plate 14 configured to connect the radiator to the plurality of heat pumps 22a and 22b and to thermally connect the plurality of heat pumps 22a and 22b. Accordingly, a slide glass cooling and heating apparatus and a slide glass cooling and heating method that can reduce heat pump power consumption in an apparatus for simultaneously heating and cooling a plurality of slide glasses using a heat pump are provided.

## Description

### Technical Field

The present invention relates to an apparatus and a method that can simultaneously cool and heat a plurality of slide glasses by a heat pump.

### Background Art

As an example of an apparatus and a method for automatically staining or processing a plurality of tissue samples placed on a microscope slide, PTL 1 describes that individualized slide temperature regulation is performed by a heating system including heating stages radially installed on a circular conveyor for heating slides and sensing temperatures thereof.

### Citation List

### Patent Literature

PTL 1: JP2002-505089A

### Summary of Invention

### Technical Problem

In a histological diagnosis, a part of extracted body tissue is observed with a microscope to determine a pathological diagnosis.

Therefore, a test sample, which is prepared on a slide glass by sectioning the extracted body tissue or the like, is subjected to heat treatment together with the slide glass in order to dissolve paraffin that fixes the tissue and to promote a staining reaction with a reagent. In the heat treatment, the slide glass including the test sample is heated or cooled to a specific temperature according to an examination procedure.

In order to efficiently process a plurality of test samples, it is required to perform heat treatment simultaneously on a plurality of slide glasses.

In order to enable a more flexible examination procedure, it is required to heat or cool adjacent slide glasses to different specific temperatures, depending on cases.

For example, PTL 1 discloses an apparatus that thermally isolates adjacent slide glasses from each other and heats or cools the adjacent slide glasses to different temperatures depending on cases at a specific time using a heater or a heat pump such as a Peltier element installed under the slide glasses.

PTL 1 described above discloses the apparatus that thermally isolates the adjacent slide glasses from each other and heats or cools the adjacent slide glasses to the different temperatures depending on the cases at the specific time using the heater or the heat pump such as a Peltier element installed under the slide glasses.

However, when the adjacent slide glasses are thermally isolated and are individually heated or cooled by the heat pump, heat absorbed from the slide glasses by the heat pump during cooling is dissipated into the atmosphere and is not effectively used, and thus power consumption of the heat pump increases.

An object of the invention is to provide a slide glass cooling and heating apparatus and a slide glass cooling and heating method that can reduce heat pump power consumption in an apparatus for simultaneously heating and cooling a plurality of slide glasses using a heat pump.

### Solution to Problem

The invention includes a plurality of aspects for solving the problem described above, and an example thereof includes: a plurality of slide glasses; a plurality of heat pumps configured to cool or heat the plurality of slide glasses one by one; a radiator configured to promote heat dissipation of the heat pumps; and a heat conductive plate configured to connect the radiator to the plurality of heat pumps and to thermally connect the plurality of heat pumps.

### Advantageous Effects of Invention

According to the invention, heat pump power consumption can be reduced when a plurality of slide glasses are heated and cooled simultaneously. Problems, configurations, and effects other than those described above will be clarified by the following description of embodiments.

### Brief Description of Drawings

[FIG. 1] FIG. 1 is a plan view showing an overall configuration of a slide glass cooling and heating apparatus according to a first embodiment of the invention.
[FIG. 2] FIG. 2 is a side cross-sectional view showing a main part of the slide glass cooling and heating apparatus according to the first embodiment.
[FIG. 3] FIG. 3 is a plan view showing a main part of a slide glass cooling and heating apparatus according to a second embodiment of the invention.
[FIG. 4] FIG. 4 is a plan view showing a main part of a slide glass cooling and heating apparatus according to a third embodiment of the invention.
[FIG. 5] FIG. 5 is a plan view showing a main part of a slide glass cooling and heating apparatus according to a fourth embodiment of the invention.
[FIG. 6] FIG. 6 is a plan view showing a main part of a slide glass cooling and heating apparatus according to a fifth embodiment of the invention.
[FIG. 7] FIG. 7 is a bottom view of the slide glass cooling and heating apparatus according to the fifth embodiment.
[FIG. 8] FIG. 8 is a plan view of an air-cooling unit of the slide glass cooling and heating apparatus according to the fifth embodiment.

### Description of Embodiments

Embodiments of a slide glass cooling and heating apparatus and a slide glass cooling and heating method according to the invention will be described below with reference to the drawings. In the drawings used in the present description, the same or corresponding components are denoted by the same or similar reference signs, and repeated description of these components may be omitted.

### <First Embodiment>

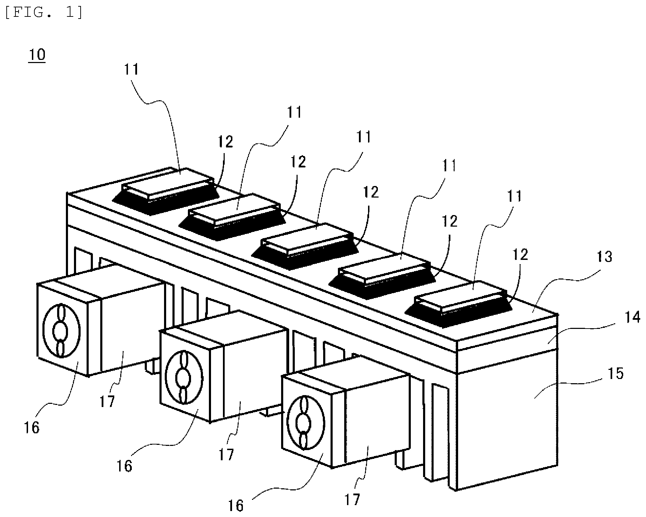

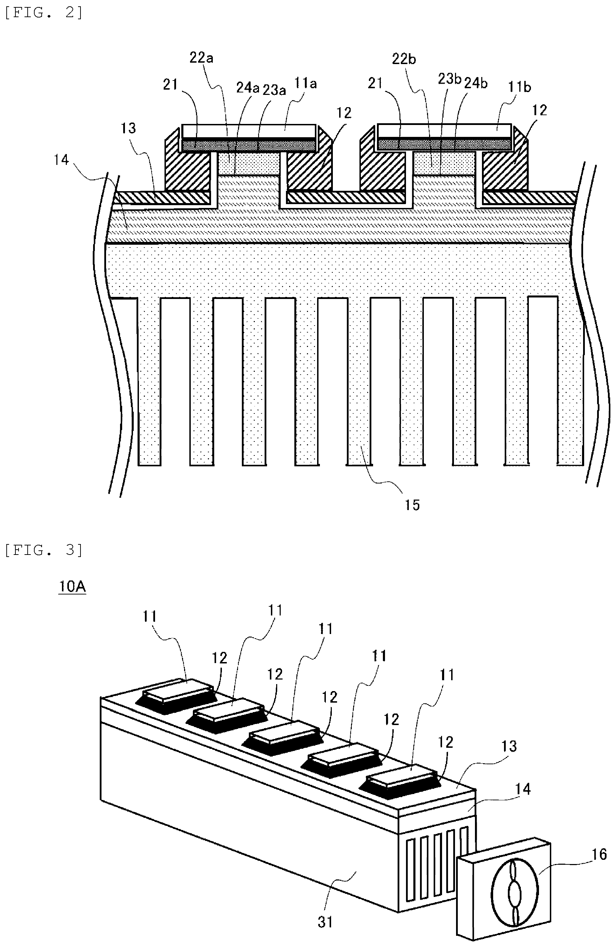

A first embodiment of a slide glass cooling and heating apparatus and a slide glass cooling and heating method according to the invention will be described with reference to FIGS. 1 and 2.

First, an overall configuration of a slide glass cooling and heating apparatus 10 will be described with reference to FIG. 1. FIG. 1 is a plan view showing an overall configuration of the slide glass cooling and heating apparatus 10.

The slide glass cooling and heating apparatus 10 shown in FIG. 1 includes a plurality of slide glasses 11 and a plurality of holders 12 each holding one slide glass 11, which are linearly arranged on a fixing base 13. Each holder 12 is a member that holds the slide glass 11 and a heat spreader 21 to be described later (FIG. 2), and the fixing base 13 is a member that fixes the holder 12. The holder 12 and the fixing base 13 are preferably made of plastic or polycarbonate resin.

A heat conductive plate 14 made of a material having excellent heat conductivity is provided below the fixing base 13 in a vertical direction. The heat conductive plate 14 is a member that connects an air-cooled heat sink 15 serving as a radiator to a plurality of heat pumps 22a and 22b and thermally connects the plurality of heat pumps 22a and 22b, and is preferably made of aluminum in terms of cost and weight, but copper or the like can also be used.

The air-cooled heat sink 15 for promoting heat dissipation of the heat pumps 22a and 22b is provided as a radiator below the heat conductive plate 14 in the vertical direction. In FIG. 1, the air-cooled heat sink 15 is depicted as having flat plate-shaped fins, but the shape is not limited to a specific fin shape as long as the shape increases a surface area of the air-cooled heat sink 15. Similar to the heat conductive plate 14, the air-cooled heat sink 15 is also preferably made of aluminum in terms of cost and weight, and copper or the like can also be used.

A fan 16 further promotes heat dissipation by blowing cooling air to the air-cooled heat sink 15.

Further, by disposing a duct 17 between the fan 16 and the air-cooled heat sink 15 to improve the directivity of the air from the fan 16, an air direction is limited such that the air from the fan 16 efficiently passes through a surface of the air-cooled heat sink 15.

Next, a main part of the slide glass cooling and heating apparatus 10 according to the first embodiment will be described with reference to FIG. **2.** FIG. 2 is a side cross-sectional view showing the main part of the slide glass cooling and heating apparatus 10.

As shown in FIG. 2, the heat spreader 21 is disposed between the slide glass 11 and the heat pumps 22a and 22b, and is provided to uniformize an in-plane temperature distribution of the slide glass 11. An area of the heat spreader 21 is preferably equal to or larger than an area of the slide glass 11 in order to uniformize the in-plane temperature distribution of the slide glass 11. The heat spreader 21 may be made of copper, a copper-based material, aluminum, or the like.

The heat pumps 22a and 22b that cool or heat slide glasses 11a and 11b one by one are provided below the heat spreader 21 such that a temperature of the slide glasses 11a and 11b is adjusted to a required temperature according to purposes. Peltier elements are preferably used as the heat pumps 22a and 22b.

The heat pump 22a is prepared for a purpose of cooling and heating the slide glass 11a, and the heat pump 22b is prepared for a purpose of cooling and heating the slide glass 11b.

The heat pumps 22a and 22b have heat absorption surfaces 23a and 23b and heat dissipation surfaces 24a and 24b, respectively. The heat conductive plate 14 is in contact with the heat dissipation surface 24a of the heat pump 22a and the heat absorption surface 23b of the heat pump 22b, and thermally connects the heat pump 22a and the heat pump 22b.

Although only the two heat pumps 22a and 22b are shown in FIG. 2 for convenience of illustration, it is assumed that all heat pumps for cooling and heating five slide glasses 11 shown in FIG. 1 are thermally connected. The number of heat pumps thermally connected is not particularly limited as long as the number is two or more.

In a case where the slide glasses 11 are arranged linearly as shown in FIG. 1 and FIGS. 3 and 4 to be described later, when all the heat pumps are collectively connected by one heat conductive plate, a structure of the heat conductive plate 14 is simplified, and production and the like are facilitated. In addition, in a case where all the heat pumps are not thermally connected by one heat conductive plate but are separately connected by a plurality of heat conductive plates, it is possible to obtain an effect of facilitating repair of the heat pump or the like, thereby allowing for appropriate selective use.

Excess heat when both of the heat pumps 22a and 22b operate for a purpose of cooling the slide glasses 11a and 11b or excess heat that still hinders cooling of the slide glass 11a when the heat absorption surface 23b absorbs heat released to the heat conductive plate 14 is released from the surface of the air-cooled heat sink 15 into the atmosphere.

Next, a method for driving the fan 16 will be described.

The excess heat that hinders cooling of the slide glass 11 is required to be dissipated from the surface of the air-cooled heat sink 15 into the atmosphere, and when an amount of heat to be dissipated is excessively large, heating of the slide glass 11 is hindered and power consumed by the heat pump 22 driven to heat the slide glass 11 increases.

Therefore, it is desirable to dissipate an appropriate amount of heat into the atmosphere according to a drive condition of the heat pump 22. The amount of heat dissipated into the atmosphere increases in proportion to an air volume from the fan 16.

Therefore, a sensor that measures a temperature of the heat pump 22, a sensor that measures a value of a current supplied to the heat pumps 22a and 22b including the Peltier elements, and a control unit that receives input values from the sensors and controls rotation of the fan 16 are further provided.

For example, when a large number of heat pumps 22 among a plurality of heat pumps 22 are driven for cooling, the fan 16 placed near a heat pump 22 driven for cooling is driven at a duty ratio of 100%. When a ratio of heat pumps 22 driven for heating is large, the fan 16 placed near a heat pump 22 driven for heating is driven with a reduced duty ratio. When all the heat pumps 22 are driven for heating, power consumption can be further reduced by performing control such as stopping the fan 16.

When the control of the fan 16 is complex, it is possible to adopt a method of providing the same number of fans 16 as the heat pumps 22 and driving the fans 16 only when the heat pumps 22 are driven for cooling.

Next, effects of the embodiment will be described.

The slide glass cooling and heating apparatus 10 according to the first embodiment of the invention described above includes the plurality of heat pumps 22a and 22b configured to cool or heat the plurality of slide glasses 11 one by one, the radiator configured to promote heat dissipation of the heat pumps 22a and 22b, and the heat conductive plate 14 configured to connect the radiator to the plurality of heat pumps 22a and 22b and to thermally connect the plurality of heat pumps 22a and 22b.

Accordingly, when the plurality of slide glasses 11 are simultaneously heated and cooled using the heat pumps 22a and 22b, a part of heat released from the heat pumps 22a and 22b can be reused for heating the adjacent slide glasses 11, and power consumption of the heat pumps 22a and 22b can be reduced.

The effect of the embodiment was verified using a thermal network. A thermal network method is a method for solving thermal energy conservation by simultaneously using a fundamental heat transfer equation. For example, assuming that two Peltier elements (a type of heat pumps) are connected and driven for the purpose of heating one to 70 °C and cooling the other to 10 °C at an environmental temperature of 40 °C, power consumption of the Peltier elements can be reduced by about 30% when the configuration of the embodiment is adopted, as compared to a case where the two Peltier elements are thermally isolated.

Since the heat pumps 22a and 22b are Peltier elements, a small and simple apparatus configuration can be obtained.

Further, since the heat spreader 21 is further provided between the slide glass 11 and the heat pumps 22a and 22b, efficiency of heating and cooling the slide glass 11 can be improved.

By further providing the holder 12 that holds the slide glass 11 and the heat spreader 21 and the fixing base 13 that fixes the holder 12, it is possible to avoid a situation in which the slide glass 11 moves during cooling and heating, and cooling and heating can be efficiently performed.

Further, by using the air-cooled heat sink 15 as a radiator, it is possible to efficiently dissipate heat when it is difficult to reuse the heat, and it is possible to improve performance as the cooling and heating apparatus.

By further providing the fan 16 for blowing the cooling air to the air-cooled heat sink 15, heat dissipation efficiency can be further improved.

Further, by further providing the duct 17 disposed between the fan 16 and the air-cooled heat sink 15 to improve the directivity of the air from the fan 16, the heat dissipation efficiency can be further improved.

### <Second Embodiment>

A slide glass cooling and heating apparatus and a slide glass cooling and heating method according to a second embodiment of the invention will be described with reference to FIG. **3.** FIG. 3 is a plan view showing a main part of the slide glass cooling and heating apparatus according to the second embodiment.

As shown in FIG. 3, a slide glass cooling and heating apparatus 10A of the embodiment uses a forced air-cooled dedicated heat sink 31 in which the air-cooled heat sink 15 and the duct 17 are integrated.

The forced air-cooled dedicated heat sink 31 has an airflow path therein and a fin shape for a purpose of increasing a heat dissipation area. Therefore, the forced air-cooled dedicated heat sink 31 receives heat from the heat conductive plate 14 and dissipates the heat from a surface of the forced air-cooled dedicated heat sink 31 to the atmosphere by heat transfer. When the air from the fan 16 passes through the airflow path, heat dissipation by heat transfer is promoted.

Other configurations and operations are substantially the same as those of the slide glass cooling and heating apparatus 10 and the slide glass cooling and heating method of the first embodiment described above, and details thereof will be omitted.

In the slide glass cooling and heating apparatus 10A and the slide glass cooling and heating method of the second embodiment of the invention as well, substantially the same effects as those of the slide glass cooling and heating apparatus 10 and the slide glass cooling and heating method of the first embodiment described above can still be obtained.

Since the air-cooled heat sink 15 and the duct 17 are integrated, it is not required to provide a plurality of fans 16 and ducts 17, and thus the configuration can be simplified.

### <Third Embodiment>

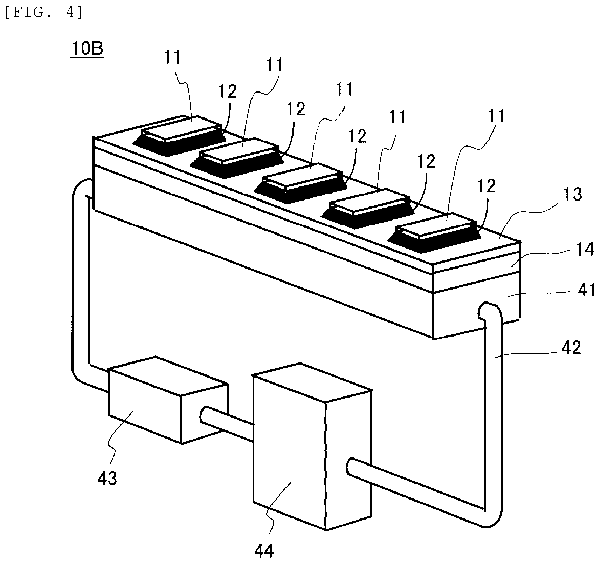

A slide glass cooling and heating apparatus and a slide glass cooling and heating method according to a third embodiment of the invention will be described with reference to FIG. **4.** FIG. 4 is a plan view showing a main part of the slide glass cooling and heating apparatus according to the third embodiment.

As shown in FIG. 4, a slide glass cooling and heating apparatus 10B of the embodiment uses a water-cooled heat sink as a radiator, and is an apparatus in which the air-cooled heat sink 15, the fan 16, and the duct 17 of the slide glass cooling and heating apparatus 10 shown in FIG. 1 are replaced with a water-cooling system.

The water-cooling system includes a water-cooled heat sink 41 having a space in which a coolant flows therein, a pipe 42 through which the coolant circulates, a pump 43 for circulating the coolant, and a heat exchanger 44 for cooling the coolant.

In the embodiment, the coolant flowing inside the water-cooled heat sink 41 receives heat from the heat conductive plate 14 and cools the coolant whose temperature is increased by the heat exchanger 44. The cooled coolant is circulated by the pump 43 and returns to the inside of the water-cooled heat sink 41 again, and such a series of steps are repeated.

Other configurations and operations are substantially the same as those of the slide glass cooling and heating apparatus 10 and the slide glass cooling and heating method of the first embodiment described above, and details thereof will be omitted.

As in the slide glass cooling and heating apparatus 10B and the slide glass cooling and heating method according to the third embodiment of the invention, substantially the same effects as those of the slide glass cooling and heating apparatus 10 and the slide glass cooling and heating method according to the first embodiment described above can still be obtained using the water-cooled heat sink as a radiator.

### <Fourth Embodiment>

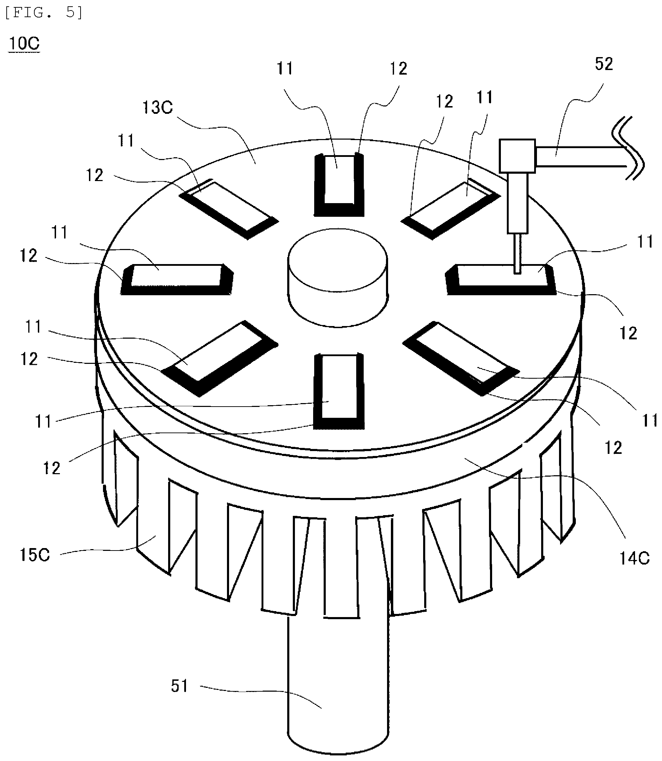

A slide glass cooling and heating apparatus and a slide glass cooling and heating method according to a fourth embodiment of the invention will be described with reference to FIG. 5. FIG. 5 is a plan view showing a main part of the slide glass cooling and heating apparatus according to the fourth embodiment.

As shown in FIG. 5, a slide glass cooling and heating apparatus 10C of the embodiment is different from the slide glass cooling and heating apparatuses 10, 10A and 10B of the first to third embodiments in that a plurality of slide glasses 11 are radially arranged.

In some cases, the slide glasses 11 are required to be arranged radially. In such cases, as shown in FIG. 5, by arranging a fixing base 13C, a heat conductive plate 14C, and an air-cooled heat sink 15C in a circular shape, it is possible to save a space in the apparatus.

For example, when a processing apparatus 52 for performing processing such as dispensing a reagent onto the slide glass 11 is required, by providing a rotation shaft 51, rotating the fixing base 13C, and changing a position of the slide glass 11 as necessary, the processing can be performed without providing any mechanism for changing the position in the processing apparatus 52.

Other configurations and operations are substantially the same as those of the slide glass cooling and heating apparatus 10 and the slide glass cooling and heating method of the first embodiment described above, and details thereof will be omitted.

As in the slide glass cooling and heating apparatus 10C and the slide glass cooling and heating method of the fourth embodiment of the invention, substantially the same effects as those of the slide glass cooling and heating apparatus 10 and the slide glass cooling and heating method of the first embodiment described above can still be obtained by arranging the plurality of slide glasses 11 radially.

In the embodiment, the forced air-cooled dedicated heat sink as in the second embodiment or the water-cooled heat sink as in the third embodiment can be used.

### <Fifth Embodiment>

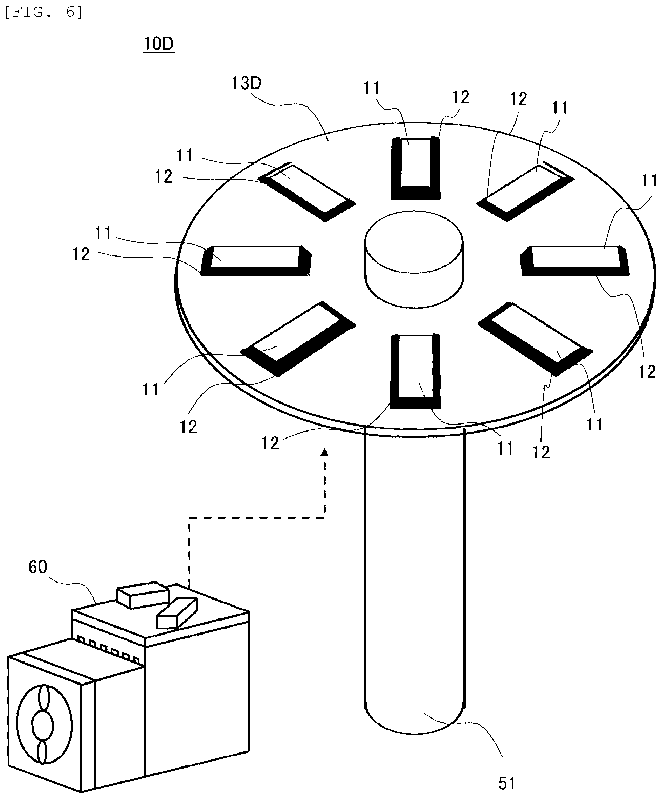

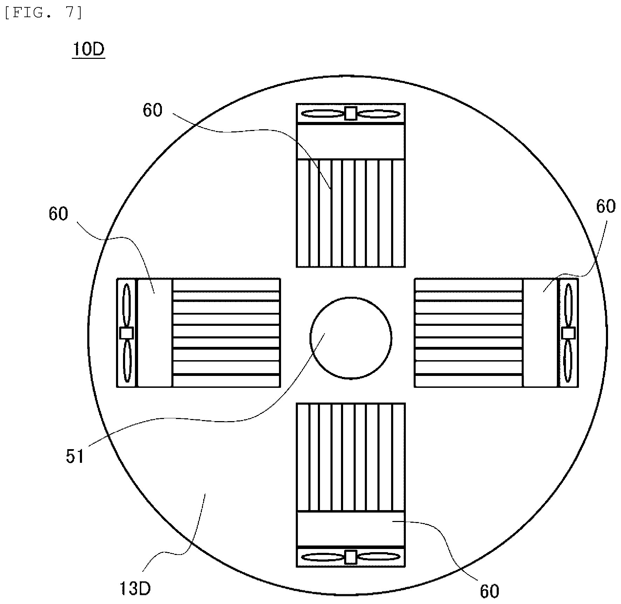

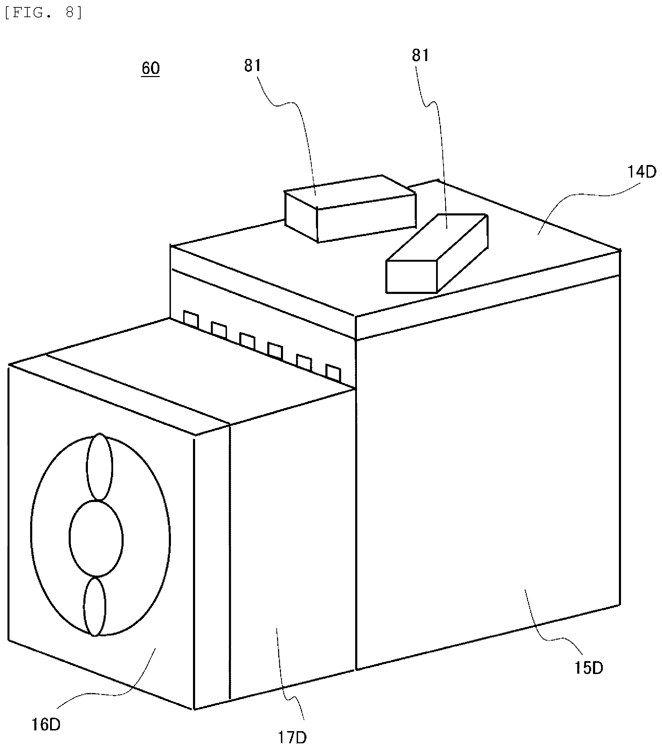

A slide glass cooling and heating apparatus and a slide glass cooling and heating method according to a fifth embodiment of the invention will be described with reference to FIGS. 6 to 8. FIG. 6 is a plan view showing a main part of the slide glass cooling and heating apparatus according to the fifth embodiment, FIG. 7 is a bottom view of the slide glass cooling and heating apparatus, and FIG. 8 is a plan view of an air-cooling unit of the slide glass cooling and heating apparatus.

As shown in FIGS. 6 and 7, in a slide glass cooling and heating apparatus 10D of the embodiment, the heat conductive plate 14C and the air-cooled heat sink 15C in the slide glass cooling and heating apparatus 10C of the fourth embodiment are replaced with an air-cooling unit 60.

As shown in FIG. 8, the air-cooling unit 60 includes a heat conductive plate 14D, an air-cooled heat sink 15D, a fan 16D, and a duct 17D. The heat conductive plate 14D includes a protrusion 81 for enabling contact with the heat pumps 22a and 22b. In the air-cooling unit 60, at least two protrusions 81 are provided to thermally connect the different heat pumps 22a and 22b. Lower surfaces of the heat pumps 22a and 22b may be at the same height as a lower surface of the fixing base 13D without providing the protrusions 81.

Other configurations and operations are substantially the same as those of the slide glass cooling and heating apparatus 10C and the slide glass cooling and heating method of the fourth embodiment described above, and details thereof will be omitted.

In the slide glass cooling and heating apparatus 10D and the slide glass cooling and heating method of the fifth embodiment of the invention as well, substantially the same effects as those of the slide glass cooling and heating apparatus 10C and the slide glass cooling and heating method of the fourth embodiment described above can still be obtained.

In the embodiment, since a volume of the heat conductive plate and the air-cooled heat sink can be reduced as compared to that in the fourth embodiment, there is an advantage that weight reduction can be achieved.

In the embodiment, the forced air-cooled dedicated heat sink or the water-cooled heat sink can still be used as the air-cooling unit as in the second and third embodiments.

### <Others>

The invention is not limited to the above-described embodiments, and includes various modifications. The embodiments described above have been described in detail to describe the invention in an easy-to-understand manner, and the invention is not necessarily limited to those including all configurations described above.

A part of a configuration according to a certain embodiment can also be replaced with a configuration according to another embodiment, and a configuration according to another embodiment can be added to a configuration according to a certain embodiment. In addition, another configuration can be added to a part of a configuration of each embodiment, and a part of a configuration of each embodiment can be deleted or replaced with another configuration.

### Reference Signs List

10, 10A, 10B, 10C, 10D... slide glass cooling and heating apparatus
11, 11a, 11b... slide glass
12... holder
13, 13C, 13D... fixing base
14, 14C, 14D... heat conductive plate
15, 15C, 15D... air-cooled heat sink (radiator)
16, 16D... fan
17, 17D... duct
21... heat spreader
22a, 22b... heat pump
23a, 23b... heat absorption surface
24a, 24b... heat dissipation surface
31... forced air-cooled dedicated heat sink (radiator)
41... water-cooled heat sink (radiator)
42... pipe
43... pump
44... heat exchanger
51... rotation shaft
52... processing apparatus
60... air-cooling unit
81... protrusion

## Claims

1. A slide glass cooling and heating apparatus comprising:
a plurality of heat pumps configured to cool or heat a plurality of slide glasses one by one;
a radiator configured to promote heat dissipation of the heat pumps; and
a heat conductive plate configured to connect the radiator to the plurality of heat pumps and to thermally connect the plurality of heat pumps.

2. The slide glass cooling and heating apparatus according to claim 1, wherein
the heat pumps are Peltier elements.

3. The slide glass cooling and heating apparatus according to claim 1, further comprising:
a heat spreader disposed between the slide glasses and the heat pumps.

4. The slide glass cooling and heating apparatus according to claim 3, further comprising:
a holder configured to hold the slide glasses and the heat spreader; and
a fixing base configured to fix the holder.

5. The slide glass cooling and heating apparatus according to claim 1, wherein
an air-cooled heat sink is used as the radiator.

6. The slide glass cooling and heating apparatus according to claim 5, further comprising:
a fan configured to blow cooling air to the air-cooled heat sink.

7. The slide glass cooling and heating apparatus according to claim 6, further comprising:
a duct disposed between the fan and the air-cooled heat sink to improve directivity of air from the fan.

8. The slide glass cooling and heating apparatus according to claim 7, wherein
the air-cooled heat sink and the duct are integrated.

9. The slide glass cooling and heating apparatus according to claim 1, wherein
a water-cooled heat sink is used as the radiator.

10. The slide glass cooling and heating apparatus according to claim 1, wherein
the plurality of slide glasses are linearly arranged.

11. The slide glass cooling and heating apparatus according to claim 1, wherein
the plurality of slide glasses are radially arranged.

12. A slide glass cooling and heating method, which is a method for cooling and heating a plurality of slide glasses, the method comprising:
cooling and heating the slide glasses in a state in which a plurality of heat pumps for cooling or heating the plurality of slide glasses one by one are thermally connected by a heat conductive plate.
